Europäisches Patentamt

(19) European Patent Office

Office européen des brevets

(11) Veröffentlichungsnummer: **0 291 975 B1**

(12) **EUROPÄISCHE PATENTSCHRIFT**

(45) Veröffentlichungstag der Patentschrift:
26.06.91 Patentblatt 91/26

(51) Int. Cl.⁵: **C01B 23/00, B01D 53/04**

(21) Anmeldenummer: **88108030.3**

(22) Anmeldetag: **19.05.88**

(54) **Verfahren zur Heliumanreicherung.**

Verbunden mit 88904951.6/0358714 (europäische Anmeldenummer/Veröffentlichungsnummer) durch Entscheidung vom 29.06.90.

(30) Priorität: **20.05.87 DE 3716898**

(43) Veröffentlichungstag der Anmeldung:
**23.11.88 Patentblatt 88/47**

(45) Bekanntmachung des Hinweises auf die Patenterteilung:
**26.06.91 Patentblatt 91/26**

(84) Benannte Vertragsstaaten:
**BE DE ES FR GB IT NL**

(56) Entgegenhaltungen:
EP-A- 0 071 553
EP-A- 0 092 695
EP-A- 0 112 640
DE-A- 3 132 758
US-A- 3 636 679
CHEMICAL ABSTRACTS, Band 92, Nr. 14, April 1980, Seite 127, Zusammenfassung Nr. 113709a, Columbus, Ohio, US; & JP-A-79 110 193 (TOKYO SHIBAURA ELECTRIC CO., LTD) 29-08-1979

(73) Patentinhaber: **Bergwerksverband GmbH**
**Franz-Fischer-Weg 61**
**W-4300 Essen 13 (DE)**

(72) Erfinder: **Knoblauch, Karl, Dr.-Ing.**
**Semperstrasse 55**
**W-4300 Essen (DE)**
Erfinder: **Pilarczyk, Erwin, Dr.-Ing.**
**Birkenstrasse 63**
**W-4250 Bottrop (DE)**
Erfinder: **Giessler, Klaus**
**Schultestrasse 41**
**W-4650 Gelsenkirchen (DE)**
Erfinder: **Bukowski, Hans**
**Humboldtstrasse 43**
**W-4300 Essen (DE)**
Erfinder: **D'Amico, Joseph S.**
**6422 Oak Park Ct.**
**Baltimore, MD 21090 (US)**
Erfinder: **Reinhold, Herbert**
**1100 Crestview Drive**
**Annapolis, MD 21041 (US)**

## Beschreibung

Die Erfindung betrifft ein Verfahren zur Heliumanreicherung nach einem Druck-Wechsel-Adsorptions-Prozeß aus Gasgemischen, die Helium, Stickstoff und Methan sowie gegebenenfalls weitere Gase enthalten und durch Kohlenstoffmolekularsiebe geleitet werden, die Stickstoff und Methan sowie gegebenenfalls die weiteren Gase adsorbieren, wobei das Gasgemisch zyklisch vier parallel geschalteten Adsorbern aufgegeben wird, die jeweils nacheinander eine Druckaufbauphase, eine Adsorptionsphase und eine Druckentlastungsphase durchlaufen, und Druckaufbau und Druckentlastung teilweise durch Druckausgleich mit einem anderen Adsorber erfolgen.

Aus der EP-A-00 92 695 ist ein solches Druckwechsel-Adsorptionsverfahren bekannt geworden, das zur Reinigung von Helium aus einem Ausgangsgasgemisch mit Helium und im wesentlichen Stickstoff, Argon und Sauerstoff sowie geringeren Anteilen an Kohlendioxid und Methan dient und bei dem unter Verwendung von Kohlenstoff-Molekularsieben Helium mit einer Reinheit von über 99,9 Vol.-% gewonnen wird. Dabei enthält jedoch das Ausgangsgasgemisch bereits 50-95 Vol.-% Helium. Mit diesem Verfahren kann eine Anreicherung von Helium aus Gasgemischen mit bis zu 10% Helium nicht vorgenommen werden, weil die Verfahrensführung und die Kombination der Verfahrensstufen hierfür nicht geeignet sind.

Aus der US-A-3 636 679 ist weiterhin ein Druckwechsel-Adsorptionsverfahren zur Heliumanreicherung bekannt, bei dem das Gasgemisch zyklisch vier Adsorbern aufgegeben wird, die jeweils nacheinander eine Druckaufbauphase, eine Adsorptionsphase und eine Druckentlastungsphase durchlaufen, wobei Druckaufbau und Druckentlastung teilweise durch Druckausgleich mit zwei verschiedenen Adsorben erfolgen und die Druckaufbauphas drei Schritte und die Druckentlastungsphase vier Schritte umfassen kann. Hierbei ist jedoch für eine vollständige Regenerierung neben den Druckentlastungsschritten ein zusätzlicher Spülschritt erforderlich, für den Produktgas verwender wird, so daß die Produktagasausbeute (gemäß Beispiel 53%) vergleichsweise niedrig ist. Weiterhin ist es nachteilig, daß die Produktagasgewinnung bei niedrigen Verfahrensdrücken (während der Entspannungsschritte) erfolgt, so daß das Produktgas für viele Verwendungszwecke auf ein höheres Druckniveau aufgedrückt werden muß. Außerdem erfordern die unterschiedlichen Drücke, unter denen das Produktgas anfällt, eine Druckvergleichmäßigung, was aber wiederum zu Mengenschwankungen im Produktgasstrom führen kann.

Helium wird zunehmend für verschiedene Anwendungszwecke benötigt, z.B. in Kälteanlagen zur Kälteerzeugung, als Schutzgas beim Schweißen und in der chemischen Industrie, in der Luftraumtechnik als Inertgas, bei Taucharbeiten in Form von Tauchatmungsgas, in der Chromatographie als Trägergas, bei der Lecksuche, als Ballongas und für andere Zwecke. Für diese Anwendungen wird Helium benötigt, das eine hohe Reinheit aufweist. Um diese hohen Reinheiten zu erhalten, sind bei Gasgemischen, die nur niedrige Heliumgehalte aufweisen, mehrere Verfahrensstufen erforderlich, um das Gasgemisch zunächst an Helium anzureichern und dann aus dem an Helium angereicherten Gasgemisch schließlich Helium mit hoher Reinheit zu gewinnen.

Helium wird hauptsächlich aus heliumhaltigen Erdgasen angereichert und gewonnen. Heliumhaltige Erdgase enthalten als Hauptbestandteile Methan und Stickstoff sowie bis zu 10 Vol.-% Helium neben geringeren Anteilen an verschiedenen höheren Kohlenwasserstoffen und Kohlendioxid.

Nach dem Stand der Technik wird folgendes Verfahren zur Heliumanreicherung angewendet, das aus "Bureau of Mines, Preprint from Bulletin 675 – Helium – 1985 Edition, United States of Interior", S. 3 und 4, bekannt ist.

Das heliumhaltige Erdgas wird in einer Kälteanlage auf ca. –150°C abgekühlt, wobei hauptsächlich die Kohlenwasserstoffe auskondensiert werden. Das so erzeugte Gasgemisch enthält bis auf geringe Anteile an anderen Gasen über 50 Vol.-% Helium und Stickstoff. Dieses Rohhelium wird in einigen Fällen an Ort und Stelle zu Helium mit hoher Reinheit weiterverarbeitet, und zwar durch eine Verfahrenskombination, bei der eine Druckwechsel-Adsorptionsanlage mit einer zweiten Kälteanlage zusammenwirkt.

Das Rohhelium ist aber auch als Zwischenprodukt im Handel und wird in diesen Fällen an anderer Stelle zu Reinhelium weiterverarbeitet.

Der Erfindung liegt die Aufgabe zugrunde, die Anreicherung von Helium aus Erdgasen mit geringen Heliumgehalten zu Rohhelium mit einem höheren Heliumgehalt als 50% allein durch Druckwechseladsorption und ohne eine Zwischenanreicherung in Kälteanlagen mit einer hohen Ausbeute zu erzielen.

Diese Aufgabe wird, ausgehend von einem Verfahren der eingangs genannten Gattung, dadurch gelöst, daß

a) die Druckaufbauphase drei Schritte umfaßt :

1. Druckaufbauschritt von einem Endvakuumdruck ($P_1$) auf eine mittlere Druckstufe ($P_3$) ;
2. Druckaufbauschritt von der mittleren Druckstufe ($P_3$) zu einer höheren Druckstufe ($P_4$) ;
3. Druckaufbauschritt von der höheren Druckstufe ($P_4$) zur höchsten Druckstufe ($P_5$) – Adsorptionsdruck ;

2

b) die Druckentlastungsphase vier Schritte umfaßt :

1. Druckentlastungsschritt von der höchsten Druckstufe ($P_5$) zur höheren Druckstufe ($P_4$) ;
2. Druckentlastungsschritt von der höheren Druckstufe ($P_4$) zur mittleren Druckstufe ($P_3$) ;
3. Druckentlastungsschritt von der mittleren Druckstufe ($P_3$) zum Atmosphärendruck ($P_2$) ;
4. Druckentlastungsschritt vom Atmosphärendruck ($P_2$) auf den Endvakuumdruck ($P_1$) ;

c) der Druckausgleich in zwei Stufen erfolgt und die erste Stufe vom Ausgang eines ersten Adsorbers, der den 1. Entlastungsschritt (von $P_5$ auf $P_4$) durchführt, zum Ausgang eines zweiten Adsorbers, der den 2. Druckaufbauschritt (von $P_3$ auf $P_4$) durchführt und der zweite Schritt vom Ausgang des ersten Adsorbers, der den 2. Entlastungsschritt (von $P_4$ auf $P_3$) durchführt, zum Eingang eines dritten Adsorbers, der den 1. Druckaufbauschritt (von $P_1$ auf $P_3$) durchführt, vorgenommen wird, und

d) der 3. Entlastungsschritt und der 4. Entlastungsschritt im Gegenstrom erfolgen, wobei ein heliumarmes Abgas anfällt, und der 3. Durckaufbauschritt mit Produktgas vorgenommen wird.

Als Adsorptionsmittel für das erfindungsgemäße Verfahren werden Kohlenstoffmolekularsiebe mit einem mittleren Adsorptionsporendurchmesser zwischen 0,1 und 0,4 nm, vorzugsweise 0,3 und 0,4 nm verwendet, weil sie äußerst wirkungsvoll Stickstoff und Methan von Helium abtrennen können, so daß überraschenderweise in einer einzigen Stufe bereits Rohhelium mit einem vergleichsweise hohen Heliumgehalt von über 50% erzeugt werden kann, wobei bei Anwendung der vorgeschlagenen Lehre vor allem eine unerwartet hohe Heliumausbeute von über 90% erzielt wird. Dies gelingt nach dem vorgeschlagenen Anreicherungsverfahren allein unter Anwendung der Druckwechseltechnik bereits aus Ausgangsgasgemischen mit einem vergleichsweise niedrigen Heliumgehalt von etwa 2-8%, ohne daß zusätzlich eine Kälteanlage benötigt wird, d.h., mit sehr niedrigem Energieaufwand.

Es empfiehlt sich, daß den Adsorbern Vorfilter vorgeschaltet sind, die mit Aktivkohle gefüllt sind, um höhere Kohlenwasserstoffe sowie gegebenenfalls weitere Verunreinigungen aus dem Erdgas vorher abzutrennen. Auf diese Weise wird vermieden, daß diese Verunreinigungen in die Kohlenstoffmolekularsiebe gelangen und deren Adsorptions- und Regenerationsfähigkeit beeinträchtigen.

Versuche haben gezeigt, daß die höchste Druckstufe ($P_5$) – Adsorptionsdruck – über 1 bar, vorzugsweise 10-30 bar, und der Endvakuumdruck unter 500 mbar, vorzugsweise 50 mbar, betragen sollten.

Gemäß einer bevorzugten Ausführungsform sind den einzelnen Druckstufen folgende Druckwerte zugeordnet :

$P_1$ = 50 mbar
$P_2$ = 1 bar
$P_3$ = 4 bar
$P_4$ = 11,7 bar
$P_5$ = 20 bar

Wie Versuche ergeben haben, kann die Gesamtzyklenzeit zwischen 450 und 3600 s betragen, vorzugsweise 720 s.

Gemäß einer bevorzugten Ausführungsform umfaßt die Druckentlastungsphase bei einer Gesamtzyklenzeit von 720 s folgende Zeitintervalle :

```
1. Entlastungsschritt von P  auf P            55 s
                            5      4
   Ruhestellung                              115 s

2. Entlastungsschritt von P  auf P            10 s
                            4      3
3. Entlastungsschritt von P  auf P            55 s
                            3      2
4. Entlastungsschritt von P  auf P           115 s
                            2      1
```

Ebenfalls gemäß einer bevorzugten Ausführungsform umfaßt die Druckaufbauphase bei einer Gesamtzyklenzeit von 720 s folgende Zeitintervalle :

1. Druckaufbauschritt von $P_1$ auf $P_3$    10 s
2. Druckaufbauschritt von $P_3$ auf $P_4$    55 s
3. Druckaufbauschritt von $P_4$ auf $P_5$    125 s

Zweckmäßig beträgt das Zeitintervall für die Produktgasgewinnung 180 s bei einer Gesamtzyklenzeit von 720 s.

Das erfindungsgemäße Verfahren eignet sich besonders zur Anreicherung von Helium aus Einsatzgasen, deren Heliumanteil 10 Vol.-% oder weniger, vorzugsweise 2 bis 8 Vol.-% beträgt, wobei der Heliumanteil im gewonnenen Rohhelium bis zu 95 Vol.-% betragen kann.

Das erfindungsgemäße Verfahren wird bevorzugt bei der Heliumanreicherung aus Erdgasen angewendet, die nach einer vorherigen Abtrennung von höheren Kohlenwasserstoffen und Spurenverunreinigungen, z.B. in an sich bekannten Adsorptionsvorfiltern, folgende Zusammensetzung haben können (Angaben in Vol.-%) :

| $N_2$ | 40-80 |
| He | 2-10 |
| $CH_4$ | 10-40 |
| $CO_2$ | < 0,1-10 |

Weitere Vorteile und Ausgestaltungen ergeben sich aus der nachfolgenden Beschreibung von Ausführungsbeispielen anhand der beiliegenden Zeichnungen. In den Zeichnungen zeigen :

Fig. 1 eine einstufige Anlage mit vier parallelen Adsorbern zur Anreicherung von Helium auf bis zu 95 Vol.-% ;

Fig. 2 ein Druck-Zeit-Diagramm eines Adsorbers der Anlage gemäß Fig. 1 ;

Fig. 3 ein Druck-Zeit-Diagramm mit zugeordneter Teilschrittfolgetabelle für die vier Adsorber der Anlage gemäß Fig. 1 ;

Fig. 4 einen Ventilschaltplan für die vier Adsorber der Anlage gemäß Fig. 1 ;

Fig. 5 ein Diagramm über die Abhängigkeit der Heliumausbeute von der Heliumreinheit in einer Anlage gemäß Fig. 1 ;

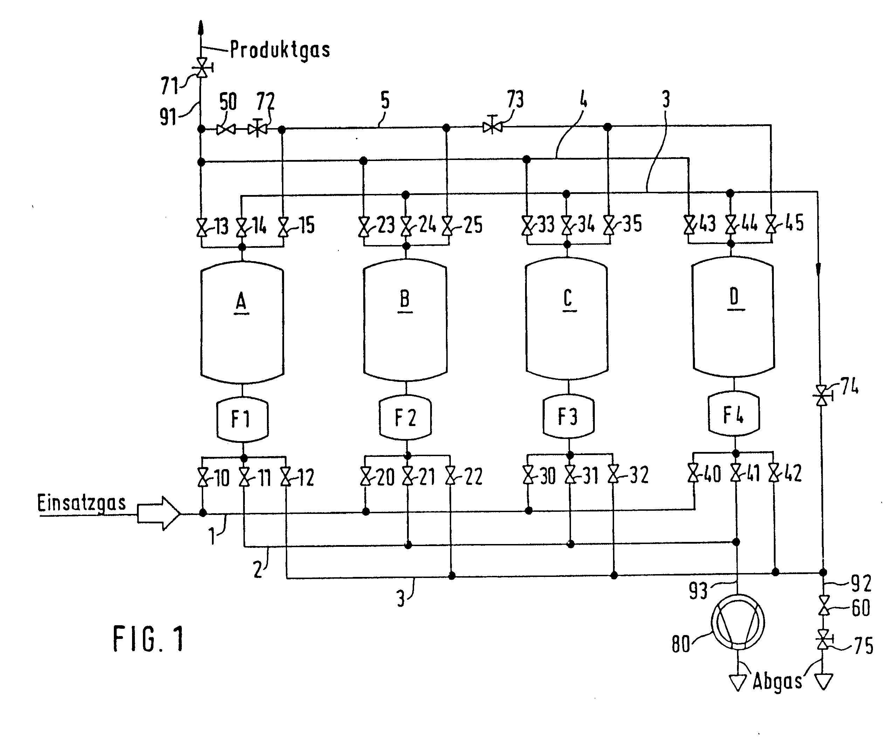

Die Anlage gemäß Fig. 1 besteht aus vier mit einem Kohlenstoffmolekularsieb gefüllten Adsorbern A bis D in paralleler Schaltung sowie gegebenenfalls aus vier mit Aktivkohle gefüllten Vorfiltern F1 bis F4, in denen erforderlichenfalls im Einsatzgasgemisch vorhandene höhere Kohlenwasserstoffe und Spurenverunreinigungen vor Eintritt in die Adsorber A bis D entfernt werden können. Jeder Adsorber durchläuft zyklisch, zeitversetzt zu den anderen drei Adsorbern, folgende acht Teilschritte :

| T1 | Adsorption |
| T2 | Druckentspannung durch Druckausgleich (Da 1) |
| T3 | Druckentspannung durch Druckausgleich (Da 2) |
| T4 | Gegenstromentspannung (GEE) |
| T5 | Evakuierung (Ev) |
| T6 | Druckaufbau durch Druckausgleich (DA 1) |
| T7 | Druckaufbau durch Druckaufgleich (DA 2) |
| T8 | Druckaufbau mit Produktgas (DA 3) |

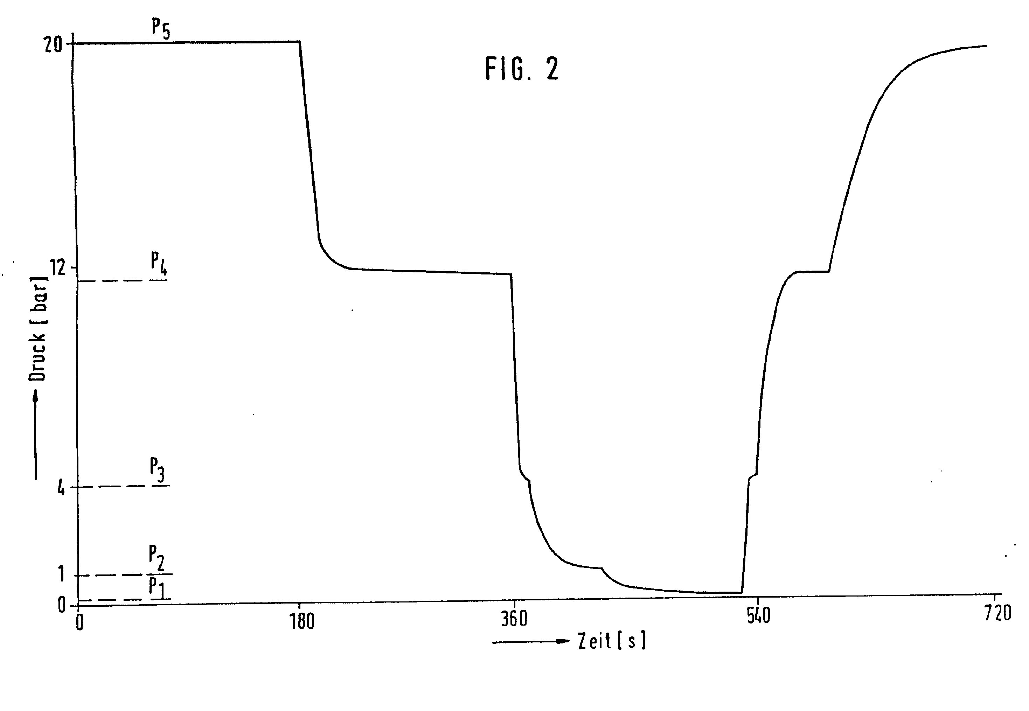

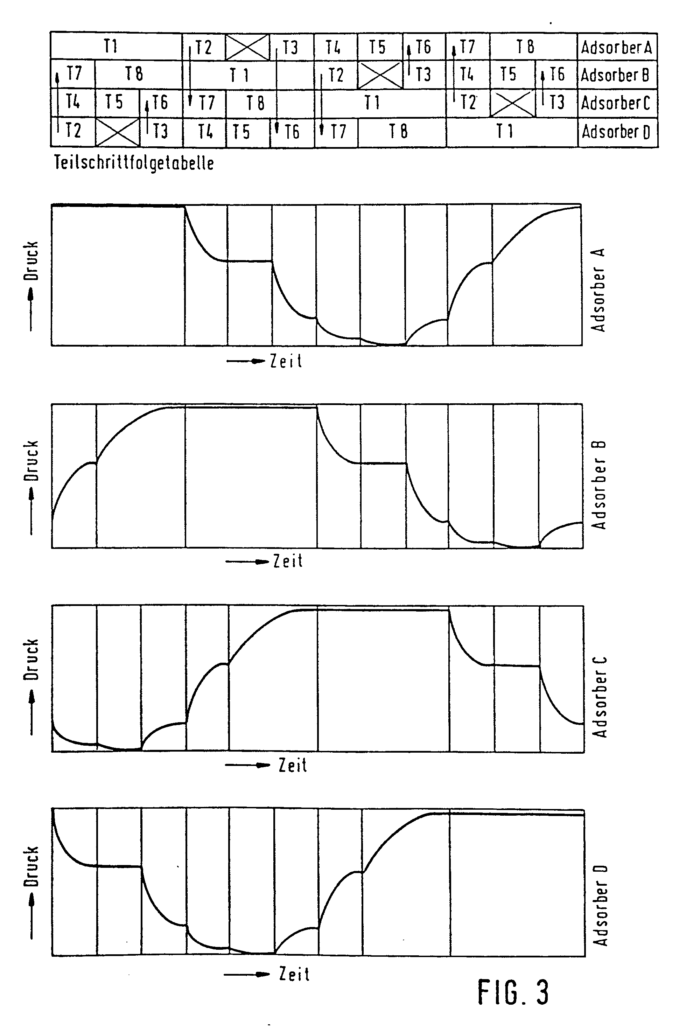

Bevor Fig. 1 im einzelnen erläutert wird, sei zunächst der Ablauf der acht Teilschritte T1 bis T8 anhand der in Fig. 2 und Fig. 3 gezeigten Druck-Zeit-Profile verdeutlicht.

Fig. 2 zeigt beispielhaft für einen Adsorptionsdruck von 20 bar und eine Gesamtzyklenzeit von 720 s das Druck-Zeit-Profil, das in jedem der vier Adsorber, zeitversetzt zu den anderen Adsorbern, abläuft. Auf der Druckachse sind fünf Druckwerte P1 bis P5 markiert, zwischen denen im vorliegenden Beispiel die Druckaufbau- und Druckentspannungsschritte erfolgen.

Fig. 3 zeigt die zeitversetzten Druck-Zeit-Profile in den vier Adsorbern A bis D. Beispielhaft wird im folgenden der Verfahrensablauf für den Adsorber A beschrieben, entsprechende Verfahrensabläufe gelten für die anderen drei Adsorber B, C und D.

Die Adsorption (Teilschritt T1) findet bei einem konstanten erhöhten Druck, beispielsweise bei 20 bar, statt. Der Adsorber A wird bei diesem Druck mit dem Einsatzgasgemisch durchströmt, wobei Stickstoff, Methan und andere Gaskomponenten vom Kohlenstoff- Molekularsieb adsorbiert werden, so daß Helium, das nicht adsorbiert wird, stark angereichert am Adsorberaustritt abströmt.

Nach der Adsorption wird der beladene Adsorber A durch mehrere Druckentlastungsschritte (Teilschritte T2 bis T5) regeneriert.

Zunächst erfolgt ein erster Druckausgleich Da 1 (Teilschritt T2), wobei das unter Adsorptionsdruck stehende Gas aus Adsorber A im Gleichstrom vom Adsorptionsdruck $P_5$ in den auf einem niedrigeren Druck $P_3$ stehenden Adsorber C entspannt wird. Die Gasabgabe von Adsorber A (T2) zu Adsorber C (T7) wird in der Teilschrittfolgetabelle der Fig. 3 durch einen Pfeil verdeutlicht.

Während des ersten Druckausgleiches (Da 1) wird der Druck im Adsorber A auf einen Druck $P_4$ entspannt, beispielsweise auf 11,7 bar, während gleichzeitig der Druck im Adsorber C von dem Druck $P_3$ auf den Druck

4

$P_4$ ansteigt (Druckaufbau DA 2).

Nach einer kurzen Stillstandzeit (Stand by) erfolgt im Adsorber A ein zweiter Druckausgleich (Da 2, Teilschritt T3), wobei das unter dem Druck $P_4$ stehende Gas aus Adsorber A – wiederum im Gleichstrom – in den auf dem Vakuumenddruck $P_1$ stehenden Adsorber D entspannt wird. Dabei sinkt der Druck im Adsorber A von dem Druck $P_4$ auf einen Druck $P_3$ ab, der beispielsweise 4 bar beträgt. Während beider Druckausgleichsschritte strömt ein heliumangereichertes Gasgemisch von Adsorber A in den Adsorber C bzw. in den Adsorber D über.

Nach den beiden Druckausgleichsschritten (Da 1 und Da 2) wird Adsorber A – im Gegenstrom – von dem Druck $P_3$ auf Atmosphärendruck $P_2$ weiterentspannt (GEE, Teilschritt T4). Hierbei fällt ein heliumarmes Gasgemisch an, in dem die während der Gegenstromentspannung (GEE) desorbierenden Komponenten wie Stickstoff und Methan angereichert sind und das als Abgas verworfen wird.

Anschließend wird Adsorber A mit Hilfe einer Vakuumpumpe 80 auf den Vakuumenddruck $P_1$, beispielsweise 50 mbar, evakuiert (Ev, Teilschritt T5). Hierbei findet eine verstärkte Desorption von Stickstoff und Methan sowie der anderen zuvor im Teilschritt T1 adsorbierten Gaskomponenten statt. Das abgesaugte Gas ist äußerst heliumarm und wird ebenfalls als Abgas verworfen.

Nach der Evakuierung ist die Regeneration des Adsorbers A beendet. Im Adsorber A wird nun der Druck in den Teilschritten T6 bis T8 sukzessive auf den Adsorptionsdruck $P_5$ erhöht.

Zunächst erfolgt ein Druckausgleich (Teilschritt T6) zwischen dem Adsorber A und dem Adsorber B, der zuvor Teilschritt T2 durchlaufen hat und sich am Ende der Evakuierung von Adsorber A auf einem höheren Zwischendruck $P_4$ befindet. Während des Druckausgleiches strömt ein heliumangereichertes Gasgemisch von Adsorber B in den Adsorber A über, wobei das Gasgemisch vorzugsweise im Gleichstrom aus dem Adsorber B abgezogen und im Gleichstrom in den Adsorber A eingeführt wird (Kopf-Boden-Druckausgleich). Dabei steigt der Druck im Adsorber A (Druckaufbau DA 1) vom Endvakuumdruck $P_1$ auf einen Zwischendruck $P_3$, beispielsweise 4 bar, an, während gleichzeitig der Druck im Adsorber B von dem Zwischendruck $P_4$ auf den Zwischendruck $P_3$ abfällt.

Durch einen weiteren Druckausgleich (Teilschritt T7) mit Adsorber C wird der Druck im Adsorber A (Druckaufbau DA 2) weiter erhöht. Adsorber C hat zuvor den Teilschritt T1, Adsorption, durchlaufen und befindet sich vor dem Druckausgleich mit Adsorber A auf dem Adsorptionsdruck $P_5$. Der Druckausgleich wird im Beispiel so durchgeführt, daß das heliumangereicherte Gasgemisch im Gleichstrom aus dem Adsorber C abgezogen und im Gegenstrom in den Adsorber A entspannt wird (Kopf-Kopf-Druckausgleich). Dabei steigt der Druck im Adsorber A von dem Zwischendruck $P_3$ auf den Zwischendruck $P_4$, beispielsweise 11, 7 bar, an, während gleichzeitig im Adsorber C der Druck vom Adsorptionsdruck $P_5$ auf den Zwischendruck $P_4$ abfällt.

Nach dem zweimaligen Druckausgleich wird abschließend mit Produktgas der Druck im Adsorber A von dem höheren Zwischendruck $P_4$ auf den Adsorptionsdruck $P_5$, beispielsweise 20 bar, erhöht (Druckaufbau DA 3, Teilschritt T8). Danach beginnt in Adsorber A ein erneuter Adsorptionsschritt (Teilschritt T1).

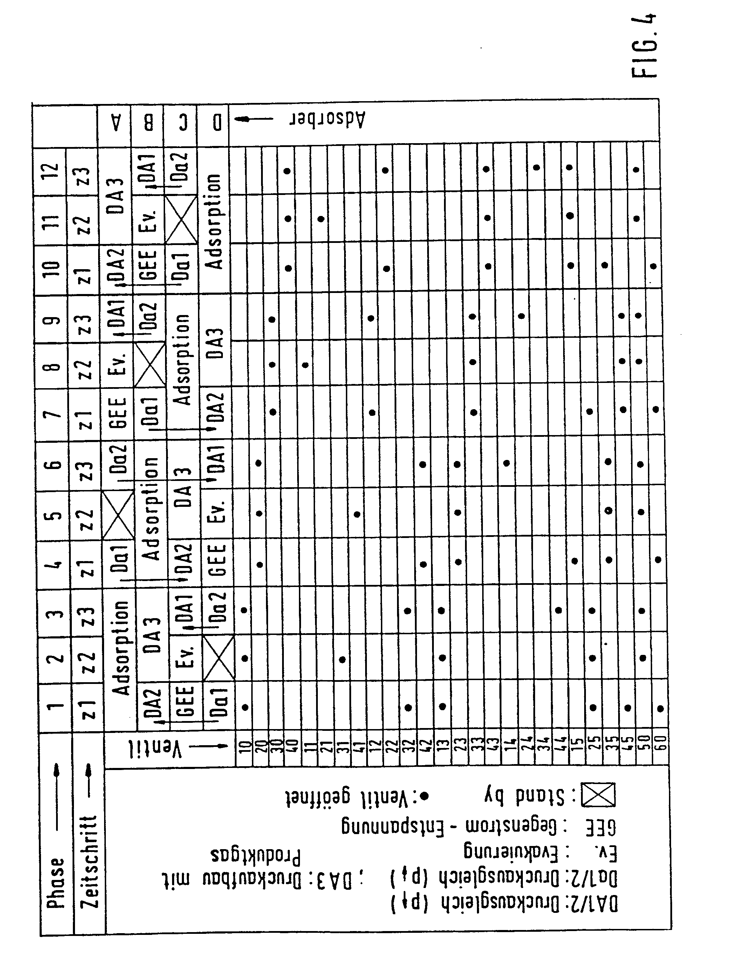

Die vier Adsorber A bis D sind, wie Fig. 1 zeigt, über eine Reihe von Ventilen so geschaltet, daß ständig einer der vier Adsorber auf Adsorption steht und Helium hoher Reinheit als Produktgas erzeugt. Die Schaltung der Ventile ist in Fig. 4 wiedergegeben. Anhand Fig. 4 und Fig. 1 wird im folgenden, beispielhaft für Adsorber A, die Gaszu- und -abführung in der in Fig. 1 dargestellten Druckwechselanlage erläutert. Vor den Adsorbern A bis D können Vorfilter F1 bis F4 vorgesehen sein, die Stand der Technik sind und in denen stark adsorbierende Gasbestandteile, wie z.B. höhere Kohlenwasserstoffe aus Bohrlochgasen vorabgeschieden werden können. Ihre Betriebsweise ist in der Regel, wie im Beispiel dargestellt, die gleiche wie die der in Reihenschaltung nachgeordneten Haupt-Adsorbern A bis D, so daß hierauf im folgenden im einzelnen nicht eingegangen zu werden braucht.

Adsorber A befindet sich nach dem Druckaufbau mit Produktgas (DA 3, Teilschritt T8) auf dem Adsorptionsdruck $P_5$. Während der anschließenden Adsorption (Teilschritt T1) strömt Einsatzgasgemisch über eine Leitung 1 bei einem Druck, der zur Überwindung des Druckverlustes in der Anlage geringfügig über dem Adsorptionsdruck liegt, bei geöffneten Ventilen 10 und 13, die in Strömungsrichtung vor bzw. hinter dem Adsorber A angeordnet sind, durch den Adsorber A hindurch. Hierbei werden an dem Kohlenstoffmolekularsieb außer Helium alle übrigen Komponenten des Einsatzgasgemisches wie Stickstoff und Methan adsorbiert, so daß am Kopf des Adsorbers A ein Heliumreichgas über eine Leitung 4 in eine Produktgasleitung 91 abströmt, in der ein Nadelventil 71 (Stellventil) angeordnet ist. Die Adsorption ist entsprechend dem Ventilschaltplan in Fig. 4 in drei Zeitschritte Z1, Z2 und Z3 unterteilt. Im Zeitschritt Z1 ist ein in einer Leitung 5 enthaltenes Ventil 50 geschlossen, so daß das gesamte Produktgas über Leitung 4 in die Produktgasleitung 91 strömt. In den Zeitschritten Z2 und Z3 ist Ventil 50 geöffnet, so daß ein Teil des Produktgases über ein nachgeschaltetes Drosselventil 72 und über die Leitung 5 und ein geöffnetes Ventil 25, das Adsorber B vorgeschaltet ist, in den Adsorber B einströmt, der mit dem Produktgas im Teilschritt T8 von dem Zwischendruck $P_4$ auf den Adsorptionsdruck $P_5$ aufgedrückt wird. Die Dauer der drei Zeitschritte Z1, Z2 und Z3 kann beispielsweise bei einer Gesamtzyklenzeit von 720 s 55 s für Zeitschritt Z1, 115 s für Zeitschritt Z2 und 10 s für Zeitschritt Z3 betragen.

Nach der Adsorption wird Adsorber A im Teilschritt T2 (Da 1) auf einen höheren Zwischendruck $P_4$ entspannt, wobei das bei einem geöffnetem Ventil 15 (Ventil 50 ist geschlossen) aus dem Adsorber A abströmende Gas in einem Kopf-Kopf-Druckausgleich über ein Drosselventil 73 in Leitung 5 bei geöffnetem Ventil 35 in Adsorber C einströmt, der dabei im Teilschritt T7 von einem Zwischendruck $P_3$ auf einen Zwischendruck $P_4$ aufgedrückt wird. Entsprechend dem Ventilschaltplan in Fig. 4 wird für diesen Druckausgleich (Da 1) ein Zeitschritt Z1 benötigt, der im Beispiel bei einer Gesamtzyklenzeit von 720 s eine Dauer von 55 s hat.

Nach diesem ersten Druckausgleich und einer Stillstandzeit (Stand by), die beispielsweise bei einer Gesamtzyklenzeit von 720 s eine Dauer von 115 s hat, wird Adsorber A im Teilschritt T3 (Da 2) über einen weiteren Druckausgleich mit Adsorber D vom höheren Zwischendruck $P_4$ auf einen niedrigeren Zwischendruck $P_3$ weiterentspannt. Hierzu wird bei geöffneten Ventilen 14 und 42 Gas aus dem Adsorber A über eine Ringleitung 3 (Ventil 60 in Leitung 92 ist geschlossen) und ein Drosselventil 74 in den Adsorber D entspannt, der dabei im Teilschritt T6 von dem Endvakuumdruck $P_1$ auf den Zwischendruck $P_3$ aufgedrückt wird. Der Druckausgleich erfolgt somit im Beispiel, wie beschrieben, als Kopf-Boden-Druckausgleich. Entsprechend dem Ventilschaltplan in Fig. 4 wird für den Druckausgleich Da 2 ein Zeitschritt Z3 benötigt, der im Beispiel bei einer Gesamtzyklenzeit von 720 s eine Dauer von 10 s hat.

Anschließend wird Adsorber A im Teilschritt T4 (GEE) bei geöffneten Ventilen 12 und 60 über Drosselventil 75 im Gegenstrom vom Zwischendruck $P_3$ auf Amosphärendruck $P_2$ weiterentspannt. Das dabei abströmende Gas wird in eine Abgasleitung 92 eingespeist. Bei einer Gesamtzyklenzeit von 720 s hat die Gegenstromentspannung im Beispiel eine Dauer von 55 s.

Nach der Gegenstromentspannung wird Adsorber A im Teilschritt T5 (Ev) bei geöffnetem Ventil 11 mit Hilfe der Vakuumpumpe 80 vom Atmosphärendruck $P_2$ auf den Endvakuumdruck $P_1$, beispielsweise auf 50 mbar, evakuiert. Das dabei abgesaugte heliumarme Gasgemisch wird in eine Abgasleitung 93 eingespeist. Bei einer Gesamtzyklenzeit von 720 s hat die Evakuierung im Beispiel eine Dauer von 115 s.

Der evakuierte Adsorber A wird anschließend im Teilschritt T6 (DA 1) in einem Druckausgleich mit Adsorber B, der vorzugsweise als Kopf-Boden-Druckausgleich ausgeführt wird, vom Endvakuumdruck $P_1$ auf den Zwischendruck $P_3$ aufgedrückt. Dabei wird ein heliumangereichertes Gasgemisch vom Austrittsende des Adsorbers B bei geöffneten Ventilen 24 und 12 (Ventil 60 ist geschlossen) über die Ringleitung 3 und Drosselventil 74 in das Eintrittsende des Adsorbers A entspannt. Adsorber B durchläuft dabei den Teilschritt T3. Bei dem Druckausgleich fällt der Druck im Adsorber B von dem Zwischendruck $P_4$ auf den Zwischendruck $P_3$. Bei einer Gesamtzyklenzeit von 720 s dauert der Druckausgleich DA 1 im Beispiel 10 s.

Der auf den Zwischendruck $P_3$ teilaufgedrückte Adsorber A wird anschließend im Teilschritt T7 (DA 2) durch einen weiteren Druckausgleich mit dem Adsorber C weiter auf den Zwischendruck $P_4$ aufgedrückt. Dieser Druckausgleich wird vorzugsweise als Kopf-Kopf-Druckausgleich in der Art duchgeführt, daß ein heliumangereichertes Gasgemisch vom Austrittsende des Adsorbers C bei geöffneten Ventilen 35 und 15 über Drosselventil 73 in der Leitung 5 in das Austrittsende des Adsorbers A entspannt wird. Adsorber C durchläuft dabei den Teilschritt T2, wobei der Druck im Adsorber C vom Adsorptionsdruck $P_5$ auf den Zwischendruck $P_4$ abfällt. Die Zeit für den Druckausgleich DA 2 beträgt bei einer Gesamtzyklenzeit von 720 s im Beispiel 55 s.

Abschließend wird Adsorber A im Teilschritt T8 (DA 3) mit Produktgas vom Zwischendruck $P_4$ auf den Adsorptionsdruck $P_5$ aufgedrückt. Hierzu wird ein Teil des Produktgases bei geöffneten Ventilen 50 und 15 über Drosselventil 72 in den Adsorber A geleitet. Der Druckaufbau DA 3 setzt sich gemäß dem Ventilschaltplan in Fig. 4 aus den beiden Zeitschritten Z2 und Z3 zusammen, die bei einer Gesamtzyklenzeit von 720 s im Beispiel eine Dauer von 115 bzw. 10 s haben.

Nach dem Druckaufbau DA 3 mit Produktgas beginnt in Adsorber A ein neuer Druckwechselzyklus, der wieder mit dem Adsorptionsschritt beginnt. Entsprechend läuft der Druckwechselzyklus in den Adsorbern B, C und D ab, jedoch zeitverschoben, wie aus der Fig. 3 ablesbar ist.

Die Regeneration des Adsorptionsmittels wird, wie beschrieben, durch einen Evakuierungsschritt erreicht. Zwar ließen sich die hier aus dem heliumhaltigen Einsatzgas zu entfernenden Gaskomponenten, wie Stickstoff und Methan, nach dem Stand der Technik auch durch eine Spülung mit Produktgas desorbieren. Eine derartige Spüldesorption würde aber bei der Heliumanreicherung aus Erdgasen mit einem Heliumgehalt von max. 10 Vol.-% zu extrem hohen Ausbeuteverlusten für Helium führen, da aufgrund des niedrigen Heliumgehaltes im Einsatzgasgemisch nur eine geringe Heliumrohgasmenge als Produktgas anfällt und gleichzeitig große Gasmengen desorbiert werden müssen, denn die durch Adsorption zu entfernenden und wieder zu desorbierenden Gaskomponenten haben im Einsatzgasgemisch einen Anteil von mindestens 90 Vol.-%.

## BEISPIELE

In einer Labordruckwechselanlage gemäß Fig. 1 (jedoch ohne Vorfilter F1 bis F4) wurden bei einem Adsorptionsdruck von 20 bar, einem Vakuumenddruck von 50 mbar und einer Gesamtzyklenzeit von 720 s, entsprechend 5 Zyklen/h, Trennversuche mit einem Gasgemisch durchgeführt, das Helium (ca. 5 Vol.-%), Methan (ca. 29 Vol.-%) und Stickstoff (ca. 66 Vol.-%) enthielt. Die vier Adsorber A bis D waren mit einem Kohlenstoffmolekularsieb mit einem mittleren Adsorptionsporendurchmesser von 0,35 nm gefüllt und hatten ein Füllvolumen von 2 1/Adsorber. In den Versuchen wurde durch eine Verstellung des Nadelventils 71 die erzeugte Produktgasmenge verändert und hierdurch die Heliumreinheit im Produktgas variiert. Die nachfolgend in den Tabellen 1 bis 4 aufgeführten Versuchsergebnisse belegen, daß mit dem erfindungsgemäßen Verfahren Helium aus einem Einsatzgas mit einem Heliumgehalt von < 10 Vol.-% auf einen Heliumgehalt von 75-95 Vol.-% im gewonnenen Rohhelium (Produktgas) angereichert werden kann, wobei je nach Heliumgehalt im Rohhelium (Produkt gas) eine Heliumausbeute von 90-99,9% erreicht wird. Die Versuchsergebnisse sind in Form einer vollständigen Massenbilanz wiedergegeben.

## Tabelle 1

| | Konzentration (Vol.-%) | | | Menge (Nl/h) |
|---|---|---|---|---|
| | He | CH$_4$ | N$_2$ | |
| Einsatzgasgemisch | 5,1 | 28,9 | 66,0 | 602,2 |
| Abgas aus Evakuierung | 0,7 | 23,1 | 76,2 | 191,3 |
| Abgas aus Gegenstromentspannung | 0,5 | 34,0 | 65,5 | 381,7 |
| Produktgas (Rohhelium) | 95,0 | -- | 5,0 | 29,2 |

Hieraus errechnet sich eine He-Ausbeute von 90,3 %.

## Tabelle 2

| | Konzentration (Vol.-%) | | | Menge (Nl/h) |
|---|---|---|---|---|
| | He | CH$_4$ | N$_2$ | |
| Einsatzgasgemisch | 5,3 | 28,9 | 65,8 | 593,6 |
| Abgas aus Evakuierung | 0,2 | 23,8 | 76,0 | 188,5 |
| Abgas aus Gegenstromentspannung | 0,2 | 34,1 | 65,7 | 371,5 |
| Produktgas (Rohhelium) | 90,0 | -- | 10,0 | 33,6 |

Hieraus errechnet sich eine He-Ausbeute von 96,1%.

## Tabelle 3

| | Konzentration (Vol.-%) | | | Menge (Nl/h) |
|---|---|---|---|---|
| | He | $CH_4$ | $N_2$ | |
| Einsatzgasgemisch | 5,1 | 28,6 | 66,3 | 604,1 |
| Abgas aus Evakuierung | - | 24,5 | 75,5 | 190,4 |
| Abgas aus Gegenstromentspannung | < 0,1 | 33,7 | 66,2 | 375,2 |
| Produktgas (Rohhelium) | 80,0 | -- | 20,0 | 38,5 |

Hieraus errechnet sich eine He-Ausbeute von 99,9 %.

## Tabelle 4

| | Konzentration (Vol.-%) | | | Menge (Nl/h) |
|---|---|---|---|---|
| | He | $CH_4$ | $N_2$ | |
| Einsatzgasgemisch | 5,4 | 28,5 | 66,1 | 609,4 |
| Abgas aus Evakuierung | - | 26,0 | 74,0 | 194,1 |
| Abgas aus Gegenstromentspannung | < 0,1 | 33,1 | 66,8 | 372,4 |
| Produktgas (Rohhelium) | 76,4 | -- | 23,6 | 42,9 |

Hieraus errechnet sich eine He-Ausbeute von 99,6 %.

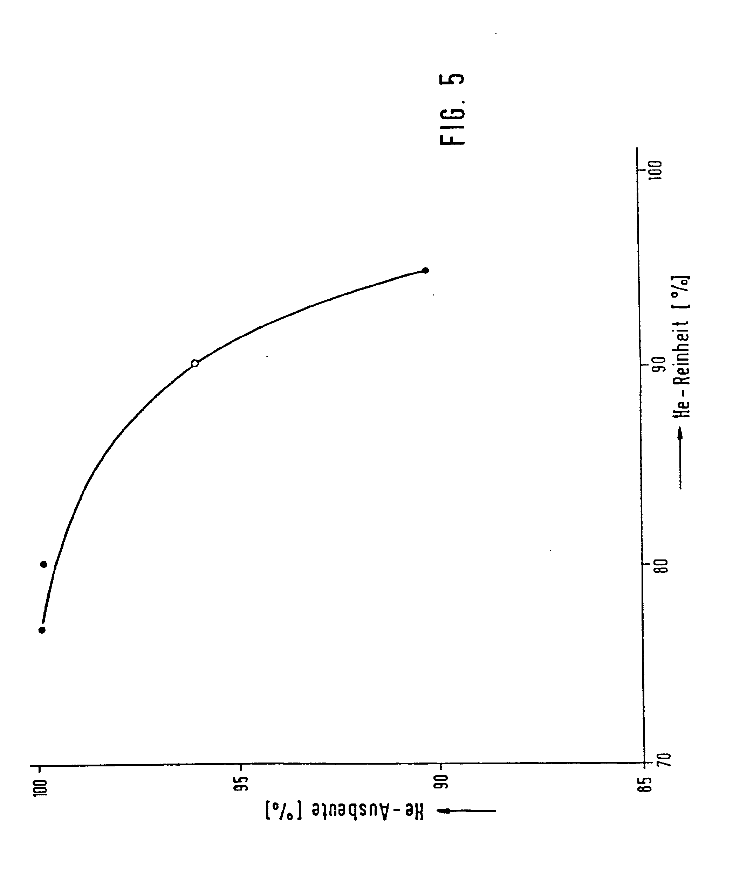

Mit steigender Heliumreinheit (Heliumgehalt des gewonnenen Rohheliums) nimmt die Heliumausbeute ab und umgekehrt. Der Zusammenhang zwischen Heliumreinheit (Heliumgehalt des gewonnenen Rohheliums) und Heliumausbeute ist in Fig. 5 wiedergegeben.

**Ansprüche**

1. Verfahren zur Heliumanreicherung nach einem Druck-Wechsel-Adsorptions-Prozeß aus Gasgemischen, die Helium, Stickstoff und Methan sowie gegebenenfalls weitere Gase enthalten und durch Kohlenstoffmolekularsiebe geleitet werden, die Stickstoff und Methan sowie gegebenenfalls die weiteren Gase adsorbieren, wobei das Gasgemisch zyklisch vier parallel geschalteten Adsorbern aufgegeben wird, die jeweils nacheinander eine Druckaufbauphase, eine Adsorptionsphase und eine Druckentlastungsphase durchlaufen, und Druckaufbau und Druckentlastung teilweise durch Druckausgleich mit einem anderen Adsorber erfolgen, dadurch gekennzeichnet, daß

a) die Druckaufbauphase drei Schritte umfaßt :

1. Druckaufbauschritt von einem Endvakuumdruck ($P_1$) auf eine mittlere Druckstufe ($P_3$) ;
2. Druckaufbauschritt von der mittleren Druckstufe ($P_3$) zu einer höheren Druckstufe ($P_4$) ;
3. Druckaufbauschritt von der höheren Druckstufe ($P_4$) zur höchsten Druckstufe ($P_5$) – Adsorptionsdruck ;

b) die Druckentlastungsphase vier Schritte umfaßt :

1. Druckentlastungsschritt von der höchsten Druckstufe ($P_5$) zur höheren Druckstufe ($P_4$) ;
2. Druckentlastungsschritt von der höheren Druckstufe ($P_4$) zur mittleren Druckstufe ($P_3$) ;
3. Druckentlastungsschritt von der mittleren Druckstufe ($P_3$) zum Atmosphärendruck ($P_2$) ;
4. Druckentlastungsschritt vom Atmosphärendruck ($P_2$) auf den Endvakuumdruck ($P_1$) ;

c) der Druckausgleich in zwei Stufen erfolgt und die erste Stufe vom Ausgang eines ersten Adsorbers, der den 1. Entlastungsschritt (von $P_5$ auf $P_4$) durchführt, zum Ausgang eines zweiten Adsorbers, der den 2. Druckaufbauschritt (von $P_3$ auf $P_4$) durchführt und der zweite Schritt vom Ausgang des ersten Adsorbers, der den 2. Entlastungsschritt (von $P_4$ auf $P_3$) durchführt, zum Eingang eines dritten Adsorbers, der den 1. Druckaufbauschritt (von $P_1$ auf $P_3$) durchführt, vorgenommen wird, und

d) der 3. Entlastungsschritt und der 4. Entlastungsschritt im Gegenstrom erfolgen, wobei ein heliumarmes Abgas anfällt, und der 3. Druckaufbauschritt mit Produktgas vorgenommen wird.

2. Verfahren nach Anspruch 1, dadurch gekennzeichnet, daß den Adsorbern Vorfilter vorgeschaltet sind, die mit Aktivkohle gefüllt sind und höhere Kohlenwasserstoffe sowie gegebenenfalls weitere Verunreinigungen aus dem Gasgemisch abscheiden.

3. Verfahren nach Anspruch 1 oder 2, dadurch gekennzeichnet, daß die höchste Druckstufe ($P_5$) – Adsorptionsdruck – über 1 bar, vorzugsweise 10-30 bar, und der Endvakuumdruck unter 500 mbar, vorzugsweise 50 mbar, betragen.

4. Verfahren nach Anspruch 3, dadurch gekennzeichnet, daß den einzelnen Druckstufen vorzugswiese folgende Druckwerte zugeordnet sind :

$P_1$ = 50 mbar
$P_2$ = 1 bar
$P_3$ = 4 bar
$P_4$ = 11,7 bar
$P_5$ = 20 bar

5. Verfahren nach einem der vorhergehenden Ansprüche, dadurch gekennzeichnet, daß die Gesamtzyklenzeit zwischen 450 und 3600 s betragen kann, vorzugsweise 720 s.

6. Verfahren nach einem der vorhergehenden Ansprüche, dadurch gekennzeichnet, daß die Druckentlastungsphase bei einer Gesamtzyklenzeit von 720 s vorzugsweise folgende Zeitintervalle umfaßt ;

```
1. Entlastungsschritt  von P  auf P        55 s
                           5      4
   Ruhestellung                            115 s
2. Entlastungsschritt  von P  auf P        10 s
                           4      3
3. Entlastungsschritt  von P  auf P        55 s
                           3      2
4. Entlastungsschritt  von P  auf P        115 s
                           2      1
```

7. Verfahren nach einem der vorhergehenden Ansprüche, dadurch gekennzeichnet, daß die Druckaufbauphase bei einer Gesamtzyklenzeit von 720 s vorzugsweise folgende Zeitintervalle umfaßt :

1. Druckaufbauschritt von $P_1$ auf $P_3$    10 s
2. Druckaufbauschritt von $P_3$ auf $P_4$    55 s
3. Druckaufbauschritt von $P_4$ auf $P_5$    125 s

8. Verfahren nach einem der vorhergehenden Ansprüche, dadurch gekennzeichnet, daß die Produktgasgewinnung bei einer Gesamtzyklenzeit von 720 s ein Zeitintervall von 180 s umfaßt.

9. Verfahren nach einem der vorhergehenden Ansprüche, dadurch gekennzeichnet, daß der Heliumanteil im Einsatzgas 10 Vol.-% oder weniger, vorzugsweise 2-8 Vol.-%, betägt.

10. Verfahren nach einem der vorhergehenden Ansprüche, dadurch gekennzeichnet, daß als Gasgemische heliumhaltige Erdgase dienen.

## Claims

1. A process for helium enrichment according to a pressure-change adsorption process from gas mixtures containing helium, nitrogen and methane and possibly further gases and conveyed through carbon molecular sieves which adsorb nitrogen and methane and possibly the further gases, the gas mixture being delivered cyclically to four adsorbers which are arranged in parallel and which each pass through a pressure build-up phase, an adsorption phase and a pressure release phase in succession, and the pressure build-up and pressure release take place in part by pressure equalization with another adsorber, characterized in that

a) the pressure build-up phase comprises three steps :

1st a pressure build-up step from an end vacuum pressure ($P_1$) to a medium pressure level ($P_3$) ;

2nd a pressure build-up step from the medium pressure level ($P_3$) to a higher pressure level ($P_4$) ;

3rd a pressure build-up step from the higher pressure level ($P_4$) to the highest pressure level ($P_5$) – adsorption pressure ;

b) the pressure release phase comprises four steps :

1st a pressure release step from the highest pressure level ($P_5$) to the higher pressure level ($P_4$) ;

2nd a pressure release step from the higher pressure level ($P_4$) to the medium pressure level ($P_3$) ;

3rd a pressure release step from the medium pressure level ($P_3$) to the atmospheric pressure ($P_2$) ;

4th a pressure release step from atmospheric pressure ($P_2$) to the end vacuum pressure ($P_1$)

c) the pressure equalization takes place in two stages, and the first stage takes place from the outlet of a first adsorber, which performs the 1st release step (from $P_5$ to $P_4$), to the outlet of a second adsorber, which performs the 2nd pressure build-up step (from $P_3$ to $P_4$) and the second step takes place from the outlet of the first adsorber, which performs the 2nd release step (from $P_4$ to $P_3$), to the inlet of the third adsorber, which performs the 1st pressure build-up step (from $P_1$ to $P_3$), and

d) the 3rd release step and the 4th release step take place in counterflow, a waste gas lean in helium being produced, and the 3rd pressure build-up step is performed with product gas.

2. A process according to Claim 1, characterized in that the adsorbers have pre-filters arranged upstream of them, which are filled with activated carbon and which separate higher hydrocarbons and possibly further impurities from the gas mixture.

3. A process according to Claim 1 or 2, characterized in that the highest pressure level ($P_5$) – adsorption pressure – amounts to over 1 bar, preferably from 10 to 30 bar, and the end vacuum pressure amounts to under 500 mbar, preferably 50 mbar.

4. A process according to Claim 3, characterized in that the individual pressure levels have the following pressure values associated with them :

$P_1$ = 50 mbar
$P_2$ = 1 bar
$P_3$ = 4 bar
$P_4$ = 11-7 bar
$P_6$ = 20 bar.

5. A process according to any one of the preceding Claims, characterized in that the total cycle time can amount to between 450 and 3600 s, preferably 720 s.

6. A process according to any one of the preceding Claims, characterized in that the pressure release phase with a total cycle time of 720 s preferably comprises the following time intervals :

| | |
|---|---|
| 1st release step from $P_5$ to $P_4$ | 55 s |
| rest position | 115 s |
| 2nd release step from $P_4$ to $P_3$ | 10 s |
| 3rd release step from $P_3$ to $P_2$ | 55 s |
| 4th release step from $P_2$ to $P_1$ | 115 s. |

7. A process according to any one of the preceding Claims, characterized in that the pressure build-up phase with a total cycle time of 720 s preferably comprises the following time intervals :

1st build-up step from $P_1$ to $P_3$     10 s
2nd build-up step from $P_3$ to $P_4$     55 s
3rd build-up step from $P_4$ to $P_5$     125 s.

8. A process according to any one of the preceding Claims, characterized in that the product gas recovery in a total cycle time of 720 s amounts to a period of time of 180 s.

9. A process according to any one of the preceding Claims, characterized in that the helium proportion in the charge gas amounts to 10% by volume or less, preferably from 2 to 8% by volume.

10. A process according to any one of the preceding Claims, characterized in that helium-containing natural gases are used as the gas mixtures.

## Revendications

1. Procédé d'enrichissement en hélium selon un procédé d'adsorption à variation de pression, au départ de mélanges gazeux qui contiennent de l'hélium, de l'azote et du méthane, comme éventuellement aussi d'autres gaz et que l'on fait passer à travers des tamis moléculaires de carbone, qui adsorbent l'azote et le méthane, comme éventuellement aussi les autres gaz, conformément auquel on introduit le mélange de gaz de manière cyclique dans 4 adsorbeurs raccordés en parallèle, qui passent chacun, l'un après l'autre, par une phase de montée en pression, une phase d'adsorption et une phase de décharge de pression et la montée en pression et la décharge de pression se réalisent partiellement par équilibrage de pression avec un autre adsorbeur, caractérisé en ce que

a) la phase de montée en pression englobe 3 étapes :
1. Etape de montée en pression à partir d'une pression de vide finale ($P_1$) jusqu'à un niveau de pression moyen ($P_3$),
2. Etape de montée en pression du niveau de pression moyen ($P_3$) jusqu'à un niveau de pression supérieur ($P_4$),
3. Etape de montée en pression depuis le niveau de pression supérieur ($P_4$) jusqu'au niveau de pression le plus élevé ($P_5$) – pression d'adsorption,

b) la phase de décharge de pression englobe 4 étapes :
1. Etape de décharge de pression depuis le niveau de pression le plus élevé ($P_5$) jusqu'au niveau de pression supérieur ($P_4$),
2. Etape de décharge de pression depuis le niveau de pression supérieur ($P_4$) jusqu'au niveau de pression moyen ($P_3$),
3. Etape de décharge de pression depuis le niveau de pression moyen ($P_3$) jusqu'à la pression atmosphérique ($P_2$),
4. Etape de décharge de pression depuis la pression atmosphérique ($P_2$) jusqu'à la pression de vide finale ($P_1$),

c) l'équilibrage de pression s'opère en deux stades et on entreprend le premier stade depuis la sortie d'un premier adsorbeur, qui réalise la première étape de décharge (de $P_5$ à $P_4$), jusqu'à la sortie d'un second adsorbeur, qui réalise la deuxième étape de montée en pression (de $P_3$ à $P_4$) et le second stade à partir de la sortie du premier adsorbeur, qui réalise la deuxième étape de décharge (de $P_4$ à $P_3$), jusqu'à l'entrée d'un troisième adsorbeur, qui réalise la première étape de montée en pression (de $P_1$ à $P_3$), et

d) la troisième étape de décharge et la quatrième étape de décharge s'opèrent en contrecourant, de manière à parvenir à un gaz résiduaire pauvre en hélium et on entreprend la troisième étape de montée en pression avec du gaz produit.

2. Procédé suivant la revendication 1, caractérisé en ce qu'en amont des adsorbeurs, sont montés des avant-filtres qui sont remplis de charbon activé et qui séparent des hydrocarbures supérieurs, comme aussi éventuellement d'autres impuretés, du mélange gazeux.

3. Procédé suivant la revendication 1 ou la revendication 2, caractérisé en ce que le niveau de pression le plus élevé ($P_5$) – pression d'adsorption – est supérieure à 1 bar et atteint de préférence 10 à 30 bars et la pression de vide finale est inférieure à 500 mbars, de préférence 50 mbars.

4. Procédé suivant la revendication 3, caractérisé en ce que les niveaux de pression individuels ont les valeurs suivantes :

$P_1$ = 50 mbars
$P_2$ = 1 bar
$P_3$ = 4 bars
$P_4$ = 11, 7 bars
$P_5$ = 20 bars

5. Procédé suivant l'une des revendications précédentes, caractérisé en ce que la durée globale du cycle peut fluctuer de 450 à 3600 s et est, de préférence, de 720 s.

6. Procédé suivant l'une des revendications précédentes, caractérisé en ce que la phase de décharge de pression comprend, pour une durée globale du cycle de 720 s, de préférence les intervalles de temps qui suivent :

| | |
|---|---|
| Première étape de décharge de $P_5$ à $P_4$ | 55 s |
| Repos | 115 s |
| Deuxième étape de décharge de $P_4$ à $P_3$ | 10 s |
| Troisième étape de décharge de $P_3$ à $P_2$ | 55 s |
| Quatrième étape de décharge de $P_2$ à $P_1$ | 115 s |

7. Procédé selon l'une des revendications précédentes, caractérisé en ce que la phase de montée en pression comprend, pour une durée totale du cycle de 720 s, de préférence les intervalles de temps suivants :

| | |
|---|---|
| Première étape de montée en pression de $P_1$ à $P_3$ | 10 s |
| Seconde étape de montée en pression de $P_3$ à $P_4$ | 55 s |
| Troisième étape de montée en pression de $P_4$ à $P_5$ | 125 s |

8. Procédé suivant l'une des revendications précédentes, caractérisé en ce que l'obtention du gaz produit comprend un intervalle de temps de 180 s, pour une durée totale du cycle de 720 s.

9. Procédé suivant l'une des revendications précédentes, caractérisé en ce que la proportion de l'hélium dans le gaz de départ atteint 10% en volume ou moins, de préférence 2 à 8% en volume.

10. Procédé selon l'une des revendications précédentes, caractérisé en ce que l'on utilise des gaz naturels contenant de l'hélium à titre de mélanges gazeux.

FIG. 1

EP 0 291 975 B1

FIG. 2

Druck [ bar ]

P5

20

12    P4

4    P3

1    P2
     P1
0

0        180       360       540       720

Zeit [ s ]

EP 0 291 975 B1

| | | | | | | | | | |
|---|---|---|---|---|---|---|---|---|---|
| T1 | T2 | ✕ | T3 | T4 | T5 | T6 | T7 | T8 | Adsorber A |
| T7 | T8 | T1 | | T2 | ✕ | T3 | T4 | T5 | T6 | Adsorber B |
| T4 | T5 | T6 | T7 | T8 | T1 | | T2 | ✕ | T3 | Adsorber C |
| T2 | ✕ | T3 | T4 | T5 | T6 | T7 | T8 | T1 | | Adsorber D |

Teilschrittfolgetabelle

FIG. 3

15

EP 0 291 975 B1

FIG. 4

**DA1/2: Druckausgleich (p↑)**
**Da1/2: Druckausgleich (p↓) ; DA3: Druckaufbau mit Produktgas**
**Ev. : Evakuierung**
**GEE : Gegenstrom - Entspannung**
**⊠ : Stand by   ● : Ventil geöffnet**

Adsorber →

| | A | B | C | D |
|---|---|---|---|---|
| | Adsorption | DA1↑ | Da2↓ | DA3 |
| | DA3 | Ev. | ⊠ | DA3 |
| | Da2↓ | GEE | Da1↑ | Da2↓ |
| | DA1↑ | Da2↓ | Ev. | DA1↑ |
| | Ev. | ⊠ | GEE | Ev. |
| | GEE | DA1↑ | DA3 | GEE |
| | Da2↓ | Adsorption | DA3 | Da2↓ |
| | ⊠ | DA3 | DA3 | Da2↓ |
| | Da1↑ | Da2↓ | Adsorption | Adsorption |

Phase: 1 2 3 4 5 6 7 8 9 10 11 12

Zeitschritt: z1 z2 z3 z1 z2 z3 z1 z2 z3 z1 z2 z3

Ventil →

16

FIG. 5